# EUROPEAN PATENT SPECIFICATION

(11) **EP 0 395 298 B1**
(45) Date of publication and mention of the grant of the patent: **27.03.1996**
(21) Application number: 90304190.3
(22) Date of filing: 19.04.1990
(51) Int. Cl.: H01L 41/09

(54) **Standing-wave type ultrasonic motor**
Ultraschallmotor mit stehender Welle
Moteur ultrasonore à onde stationnaire

(30) Priority: 28.04.1989 JP 110450/89
(43) Date of publication of application: 31.10.1990
(73) Proprietor: SEIKO INSTRUMENTS INC., Tokyo 136 (JP)
(72) Inventor: Kasuga, Masao c/o Seiko Instruments Inc., Tokyo (JP); Tsukada, Nobuo c/o Seiko Instruments Inc., Tokyo (JP); Kitamura, Hiroshi c/o Seiko Instruments Inc., Tokyo (JP)
(74) Representative: Miller, Joseph

(56) References cited:
- EP-A- 0 169 297
- DE-A- 3 626 389
- GB-A- 2 196 190
- JAPANESE JOURNAL OF APPLIED PHYSICS, SUPPLEMENTS. vol. 28-1, March 1989, TOKYO JA pages 3 - 6; S.Ueha: "Present state of the art of ultrasonic motor"
- JAPANESE JOURNAL OF APPLIED PHYSICS, SUPPLEMENTS. vol. 26-1, 1987, TOKYO JA pages 191-193; T. Iijima et al.: "Ultrasonic motor using flexural standing wave"
- JAPANESE JOURNAL OF APPLIED PHYSICS, SUPPLEMENTS. vol. 27-1, March 1988, TOKYO JA pages 192 - 194; T.Takano et al.: "Ultrasonic motors using piezoelectric ceramic multimode vibrators"
- JAPANESE JOURNAL OF APPLIED PHYSICS, SUPPLEMENTS. vol. 27-1, March 1988, TOKYO JA pages 195 - 197; Y.Tomikawa: "Construction of ultrasonic motors and their application"
- PATENT ABSTRACTS OF JAPAN vol. 12, no. 494 (P-805) 23 December 1988 & JP-A- 63 205591
- PATENT ABSTRACTS OF JAPAN vol. 11, no. 293 (P-619) 22 September 1987 & JP-A- 62 088986

## Description

The present invention relates to an ultrasonic motor that generates driving force by utilizing the piezo-electric action or the electrostrictive action of a piezo-electric element or an electro-strictive element. More specifically, the invention relates to an ultrasonic motor utilizing standing-waves and to an analog-type electronic timepiece using the ultrasonic motor.

A standing-wave type ultrasonic motor is known which employs a Langevin oscillator as a driving source. Such a motor is disclosed in U.S. Patent No. 4,019,073. A travelling-wave type motor is also known which employs a travelling-wave generated on a stator for driving a rotor provided on the stator.

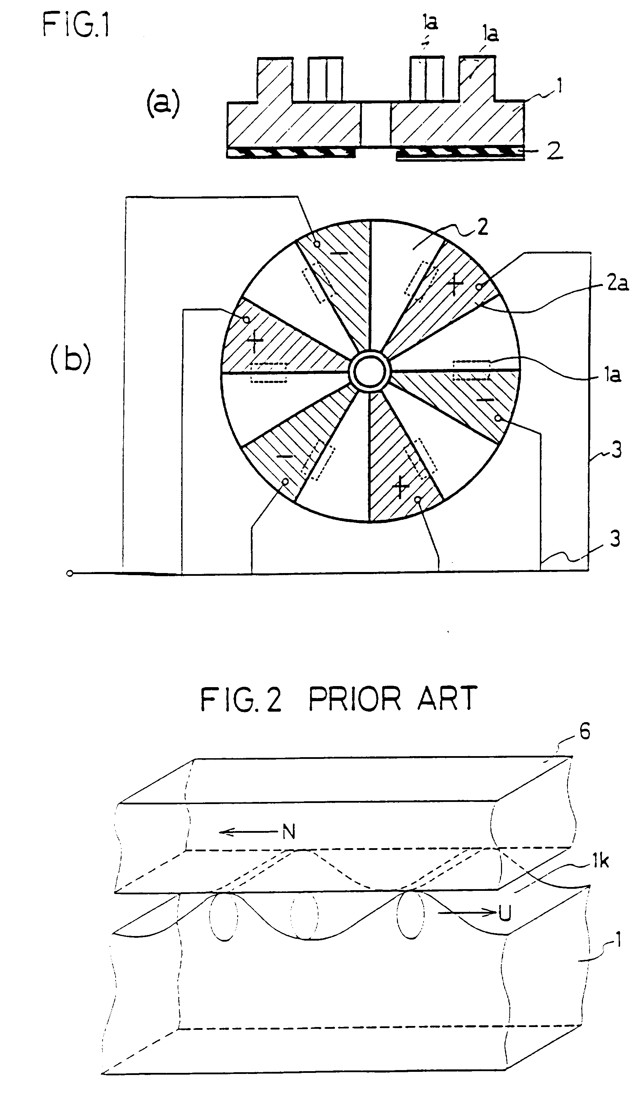

Such a travelling-wave motor is disclosed in U.S. Patent No. 4,513,219 of Katsuma et al., U.S. Patent No. 4,562,374 of Sashida and European Patent Application No. 169,297 of Tokushima. Katsuma et al. and Sashida disclosed a travelling-wave motor employing a ring type of piezo-electric member. This type of travelling-wave motor essentially consists of an annular vibration member and a movable member provided thereon. The principle of a known wave-type ultrasonic motor is shown diagrammatically in Figure 2 in which a vibration member 1 has an annular piezo-electric element thereon. The vibration member 1 is fixed to a base (not shown) through a support means (not shown). On the annular type piezo-electric element, a gap having the length of half of the arc of an electrode is provided between two electrode groups. A travelling-wave is generated by applying AC signals having a phase difference of 90° to the two groups.

A pressure-regulating means is provided on a central shaft for establishing suitable contact pressure between the vibration member and the movable member to transmit the travelling-wave component efficiently to the movable member. The vibration member is supported and fixed on two circular projections formed on a base. The disk-shaped piezo-electric element consists of a plurality of parts interposed in such a way that the piezo-electric element slips by half a pitch of the arc length, the piezo-electric element having an even number of electrodes in the circumferential direction so that each electrode has the same arc length.

Other known constructions have been disclosed in, for example, Japanese Patent Laid-Open Publications Nos. 148682/1983, 183981/1985, 207466/1985, and 207069/1985 and "Ultrasonic Motor Utilizing Standing Waves of Bent Ring", Treatise of the Japanese Association of Acoustics, Tomikawa et al., Yamagata University, March 1988.

A ring-shaped vibration member may have a plurality of projections on one side. A piezo-electric element is adhered to the other side of the vibration member. When a high frequency voltage is applied to the piezo-electric element, the vibration member vibrates so that the node of the vibration is brought to the bottom of the projections of the vibration member. Consequently, one of two tips of a projection rises higher than the other tip.

A movable member contacts the projections of the vibration member with a suitable contact pressure. The vibration member deforms to rotate the movable member. This type of ultrasonic motor can rotate the movable member in only one direction.

In the case of the travelling-wave type ultrasonic motor shown in Figure 2 based on the above-mentioned ultrasonic motor construction, two high frequency voltages of dissimilar phases are necessary to generate progressive waves in the vibration member 1. For this purpose, therefore, there are required two booster circuits and two drive circuits making it difficult to produce the device in a small size since the device must also include control circuits. Further, since the vibration member 1 always comes in contact with the movable member 6 at wave front portions having the greatest vertical amplitude component, the device is readily affected by a change in the pressure between the vibration member 1 and the movable member 6.

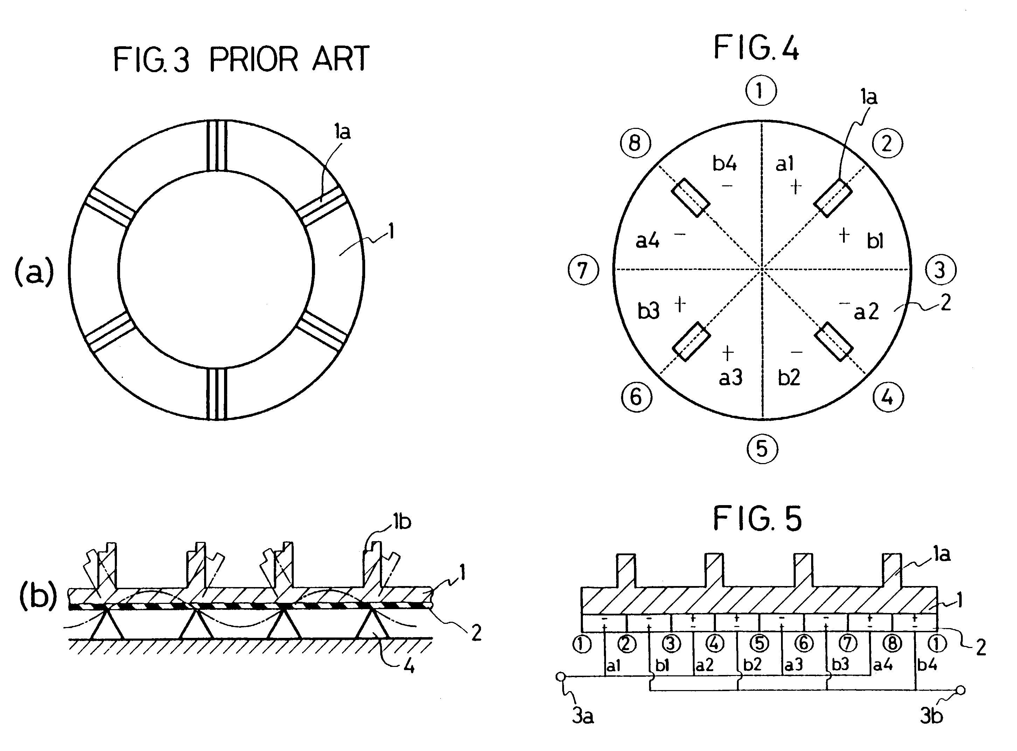

Moreover, in the case of the standing-wave type ultrasonic motor shown in Figure 3, there is the advantage that support is obtained at nodal portions of the standing-waves generated in the vibration member 1 and the piezo-electric element 2. However, the motion is obtained in one direction only. Even in the case of the ring-type vibration member 1 shown in Figure 3, a drive force is not obtained in both the forward direction and the reverse direction.

Japanese Patent Laid-Open Publications Nos. 183981/1985, 207466/1985 and 207469/1985 disclose standing-wave type ultrasonic motors without, however, clarifying the positions of projections 1a that are provided at the contact portions of the vibration member 1 and the movable member 6. Moreover, stable motor characteristics are not obtained and the driving force is not obtained in both the forward and reverse directions.

The article Japanese Journal of Applied Physics, vol. 28, March 1989, supplement 28-1, pp. 3-6, S. UEHA : "Present state of the art of ultrasonic motors" shows on Fig. 2 a standing-wave ultrasonic motor provided with projections and which can be driven in a single one direction.

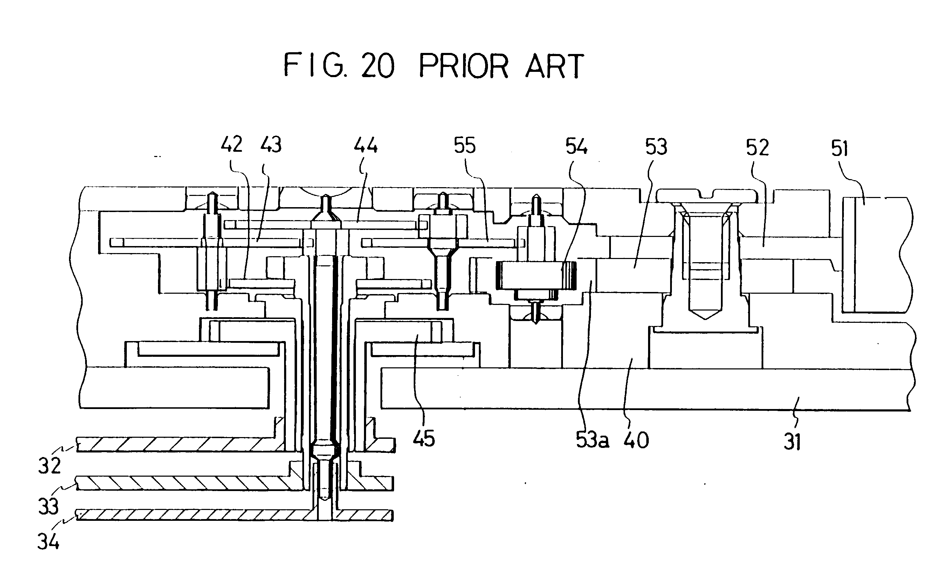

Figure 20 is a vertical section view illustrating a known analog-type electronic timepiece.

A stator 53 is placed on the upper surface of a main plate 40, and a coil core 52 in contact with the upper surface of the stator 53 is fastened thereto by screws. A coil of wire 51 is wound on the coil core 52 and is wired to a drive control circuit that is not shown.

A rotor 54 is rotatably mounted in a rotor hole 53a of the stator 53, and rotation of the rotor 54 is transmitted to a fifth wheel 55, a fourth wheel 44, a third wheel 43, a minute wheel 42, another minute wheel that is not shown, and to an hour wheel 45.

When a predetermined voltage is applied to the coil 51 at a predetermined cycle, the rotor 54 is rotated by the magnetic force of the stator 53, so that an hour hand 32 attached to the hour wheel 45 indicates the hours, a minute hand 33 attached to the minute wheel indicates the minutes, and a seconds hand 34 attached to the fourth wheel indicates the seconds.

According to the present invention, there is provided a standing wave type ultrasonic motor comprising: a vibration member having projections in drive-transmitting contact with a movable member, support means for supporting the vibration member, a piezo-electric or electrostrictive element having a plurality of electrode patterns arranged to generate a flexible standing wave in the vibration member and connecting means for the electrical connection of alternate electrode patterns to form two electrode pattern groups, the electrode patterns being arranged in multiples of 4, being substantially equally spaced apart, and being polarised such that the direction of polarisation is alternately reversed for each pair of two neighbouring electrode patterns.

The projections are arranged at every other boundary of the electrode patterns and such that they appear at every other one of the intermediate positions between the loops and nodes of the flexible standing wave.

A standing-wave ultrasonic motor according to the preamble portion of claim 1 is disclosed in GB-A-2 196 190.

The support means may support a nodal portion or portions of the vibration member.

The vibration member and the piezoelectric electrostrictive element may form a unitary structure.

The support means may be made of an electrically conductive material.

The vibration member may be shaped as a disc or as a ring.

The vibration member may have a plurality of projections in the radial direction.

The projections may be of the same or of different heights.

There may be two piezo-electric elements or electrostrictive elements each of which is provided with one of the said group of electrode patterns, the piezo-electric elements or electrostrictive elements being so arranged that the boundary of each position of one piezo-electric element or electostrictive element is positioned near the centre of that of the other one; and said projections are arranged on the boundaries of the portions of either one of the said piezo-electric elements or electrostrictive elements.

The invention also comprises an analog type electric timepiece provided with a motor as set forth above.

The present invention enables an ultrasonic motor of high performance to be produced which is simple in construction, small in size despite the inclusion of a control circuit, and which can be driven in both the forward and reverse directions. The motor may, moreover, have a stabilized performance and improved efficiency.

In one embodiment, the piezo-electric element or the electro-strictive element is suitably segmented or electrode patterns are provided so that homogeneous standing-waves will be generated and projections are simply provided nearly at every other intermediate position of the loops and the nodes of the standing-waves. A high frequency voltage may be applied to the piezo-electric element or the electrostrictive element and this may be switched so as to cause the positional relationship of the loop and the node of the standing-waves to differ by 90 degrees in phase. This enables the movable member to be driven in the reverse direction as well. Further, since projections for driving the movable member are provided substantially at the midway positions between the loops and the nodes of the standing-waves, it will be obvious that stable motor performance is obtained even for a change in the pressure between the vibration member and the movable member or even for a variation in the contact areas thereof compared with that of a travelling-wave type ultrasonic motor in which the vibration member is always in contact with the movable member at the positions of the loops.

In an analog-type timepiece using the said standing-wave type ultrasonic motor, a predetermined cyclic voltage may be applied to the piezo-electric element from a drive control circuit, so that the vibration member undergoes deformation and the movable member is rotated at a predetermined speed. The movable member rotates the timepiece wheels at predetermined speeds. Thus, time data can be indicated by attaching hands or pointers directly to the movable member or the wheels.

The invention is illustrated, merely by way of example, in the accompanying drawings, in which:-
Figures 1(a) and 1(b) are respectively a sectional view and a back plan view of a vibration member of a standing-wave type ultrasonic motor according to an embodiment of the present invention;
Figure 2 is a diagram illustrating the principle of a known progressive-wave type ultrasonic motor;
Figure 3 is a diagram illustrating the principle of a known standing-wave type ultrasonic motor;
Figure 4 is a diagram illustrating a vibration member of a second embodiment of the present invention;
Figure 5 is a diagram illustrating in cross section the vibration member of the second embodiment of the present invention and the wiring therefor;
Figures 6(a) and 6(b) are diagrams illustrating the principle of deformation of the vibration member of the second embodiment of the present invention;
Figure 7 is a diagram of electrode patterns of a piezo-electric element used in the first embodiment of the present invention;
Figures 8(a) and 8(b) are a front plan view and a sectional view respectively of a vibration member of a third embodiment of the present invention;
Figures 9(a) and 9(b) are a front plan view and a sectional view respectively of a vibration member of a fourth embodiment of the present invention;
Figures 10(a) and 10(b) are a front plan view and a sectional view respectively of a vibration member of a fifth embodiment of the present invention;
Figure 11 is a diagram illustrating in cross section the vibration member of the fifth embodiment of the present invention and the wiring therefor;
Figure 12 is a diagram illustrating the principle of deformation of the vibration member of the fifth embodiment of the present invention;
Figure 13 is a sectional view of a standing-wave type ultrasonic motor according to the present invention;
Figures 14(a) and 14(b) are a sectional view and a back plan view respectively of a vibration member of a sixth embodiment of the present invention;
Figures 15(a) and 15(b) are a front plan view and a sectional view respectively of a vibration member of a seventh embodiment of the present invention;
Figures 16(a) and 16(b) are a front plan view and a sectional view respectively of a vibration member of a linear-type ultrasonic motor according to an eighth embodiment of the present invention, and the wiring therefor;
Figures 17(a), 17(b) and 17(c) are respectively a front plan view, a sectional view and a left side view of a vibration member of a ninth embodiment of the present invention, and the wiring therefor;
Figure 18 is a vertical sectional view of a three-hand analog electronic timepiece using the standing-wave type ultrasonic motor of the present invention;
Figure 19 is a vertical sectional view of a two-hand analog electronic timepiece using the standing-wave type ultrasonic motor of the present invention; and
Figure 20 is a vertical sectional view showing a known analog electronic timepiece.

Terms such as "left" and "right" as used herein are to be understood to refer to directions as seen in the accompanying drawings.

Figure 1 is a diagram of a vibration member of a standing-wave type ultrasonic motor according to a first embodiment of the present invention, wherein (a) is a sectional view and (b) is a back plan view. In order to excite standing-waves according to this embodiment, a piezo-electric element 2 is mounted on and adhered to one surface of a disc-like vibration member 1 and may, for example, be joined thereto by thin film forming means. As a result, the expansion-contraction motion in the peripheral direction of the piezo-electric element 2 is converted into bending motion, with the vibration member 1 and the piezo-electric element 2 acting as a unitary structure.

The piezo-electric element 2 is divided into twelve segments in the circumferential direction and an electrode pattern 2a is formed on every other segment to effect the polarization shown in Figure 1(b) in order to excite three waves in the circumferential direction. In Figure 1(b), the signs (+) and (-) indicate the directions of polarization, i.e. (+) indicates the polarization when a positive electric field is applied to the side where the piezo-electric element 2 is joined to the vibration member 1, and (-) indicates the polarization when a negative electric field is applied thereto.

The piezo-electric element 2 may either be one obtained by forming electrode patterns 2a divided into twelve segments on a disc, or one obtained by arranging twelve fan-shaped piezo-electric elements on the disc.

A projection 1a is formed on each of the electrode patterns 2a and the latter is connected by a lead wire 3 to receive a high frequency voltage from a cyclic voltage generating unit, so as to constitute a standing-wave type ultrasonic motor. Further, the same patterns as the electrode patterns 2a are formed on the portions of the piezo-electric element 2 that are not hatched, and are electrically connected together, and the application of a cyclic voltage thereto is switched by switching means (not shown) so as to drive the motor in the reverse direction. The principle of drive will be described later.

The vibration member 1 is made of a resilient material such as aluminium alloy, stainless steel, brass or like material, and the projections 1a may be formed as a unitary structure or separately. The positions for setting the projections 1a in the radial direction of the vibration member 1 are determined by the mode in which the vibration member is vibrated in the radial direction. In the case of the secondary mode, the projections should be located at positions of maximum displacement of the inner peripheral portion, and in the case of the primary mode, the projections should be located on the inside rather than at the positions of maximum displacement of the outer circumferential portion to obtain favourable motor characteristics.

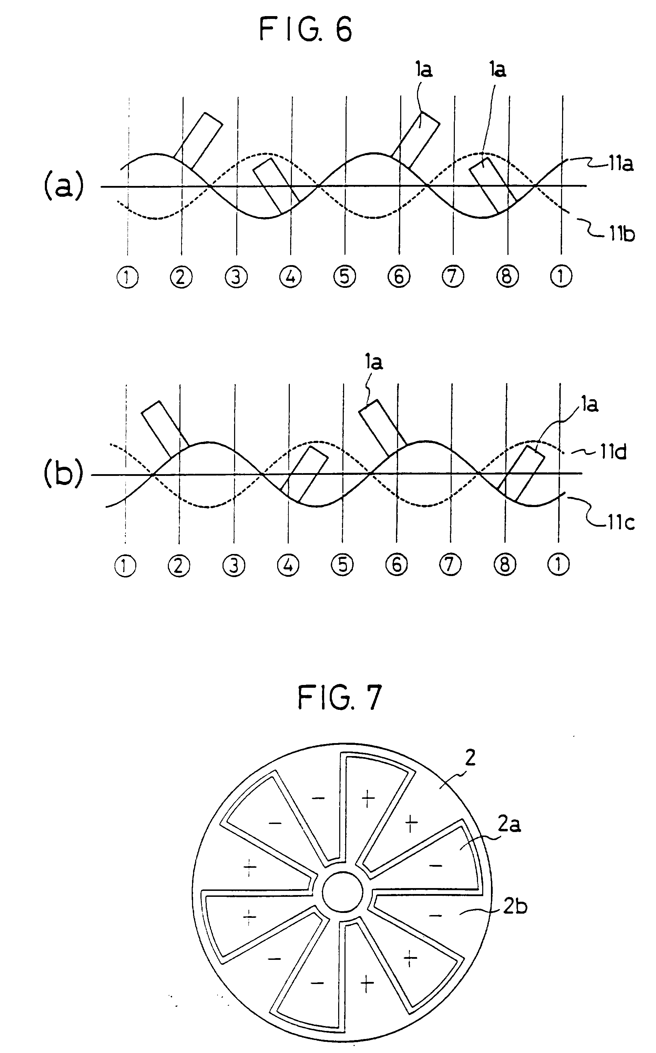

Figure 4 illustrates a vibration member of a second embodiment of the present invention, and Figures 5 and 6 explain the principle of operation of the second embodiment.

In Figure 4, the disc-like piezo-electric element 2 is equally divided into eight segments, the separate segments being denoted by a1, b1, a2, -----, b4 in order and being polarized as shown, the piezo-electric element being joined to a vibration member 1 that is not shown. For ease of explanation, furthermore, the boundaries of the separate segments are denoted by ①, ②, ---, ⑧ in order and projections 1a are provided on ②, ④, ⑥, and ⑧. In this embodiment, two waves are excited in the circumferential direction.

Figure 5 is a diagram showing in cross section the vibration member of the second embodiment of the present invention and the wiring thereof.

A lead wire 3a connects the thus separate piezo-electric elements a1, a2, a3, a4 together, and a lead wire 3b connects the piezo-electric elements b1, b2, b3, b4 together. A cyclic voltage from a cyclic voltage generating unit is applied to the lead wire 3a or to the lead wire 3b through switching means (not shown) so that the standing-waves excited in the vibration member 1 will have phases that differ by 90 degrees, thus enabling the driving direction of a moving member (not shown) to be switched.

Figure 6 is a diagram illustrating the deformation of the vibration member of the second embodiment of the present invention, wherein (a) shows the case where the cyclic voltage is applied to the lead wire 3a of Figure 5 to excite the piezo-electric elements a1, a2, a3 and a4 and the moving member is driven rightwards. The diagram (b) shows the case where the cyclic voltage is applied to the lead wire 3b to excite the piezo-electric elements b1, b2, b3 and b4 and the moving member is driven leftwards. That is, in the diagrams (a) and (b), the excited standing-waves have loops and nodes whose phases differ by 90 degrees relative to each other. Therefore, the locus of motion of the projections 1a can be reversed, making it possible to switch the driving direction of the moving member. Here, the rotation is based on the principle that as the tip of a projection 1a undergoes reciprocating motion towards the upper direction, very great acceleration is obtained at the moment when the projections 1a come into collision with the moving member (not shown) and the components that contribute to driving the moving member become effective. The projections 1a that come into contact with the moving member are set at intermediate positions between the loops and the nodes of the waves, thus eliminating the problems inherent in the known travelling-wave type ultrasonic motor such as a change in the pressure between the vibration member and the moving member and poor stability in the performance when driven by small power since the vibration member is in contact with the moving member at the loop portions of the waves.

Figure 7 is a diagram of an electrode pattern which may be used in connection with the piezo-electric element of the first embodiment of the present invention. The pattern shown in Figure 7 is a concrete embodiment that can be adapted to the embodiments shown in Figures 1 and 4. That is, in the arrangement shown in Figure 7, the number of separate electrode patterns 2a is twice as great as the desired number of waves to be excited in the circumferential direction and connections must be made to every other separate electrode pattern 2a. The lead wires are generally attached by soldering or welding. When the lead wires are drawn out from all of the separate electrode patterns, however, it is inevitable that there will be vibration leaks, that losses will increase and that there will be production difficulties. In this embodiment, therefore, the electrode pattern divided into twelve segments is formed on the piezo-electric element 2 by thin film-forming means such as vapour deposition, sputtering, or printing, and is then polarized as shown in Figure 7. Thereafter, connection is made to every other segment-like electrode pattern 2a by the thin film-forming means so as to obtain advantage from the standpoint of motor performance and production efficiency. According to this embodiment, two lead wires need to be drawn out at all times irrespective of the number of waves.

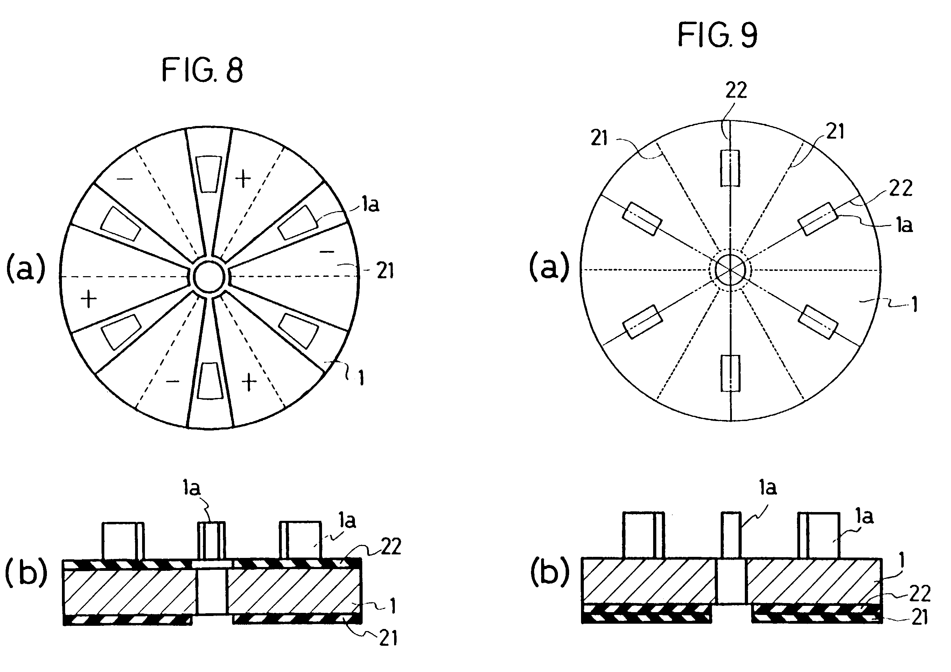

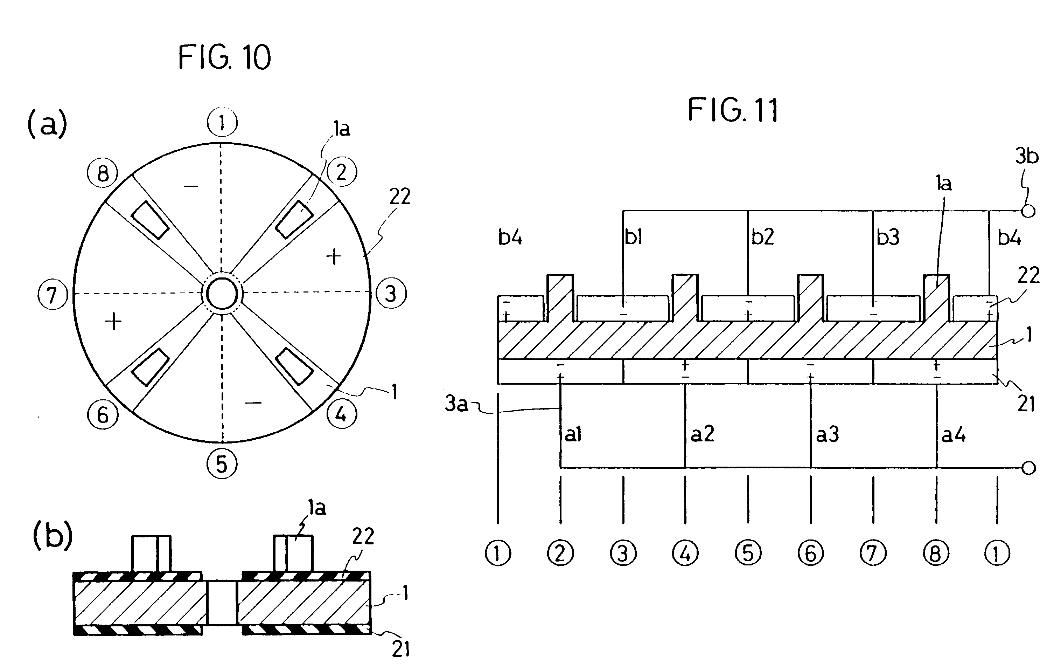

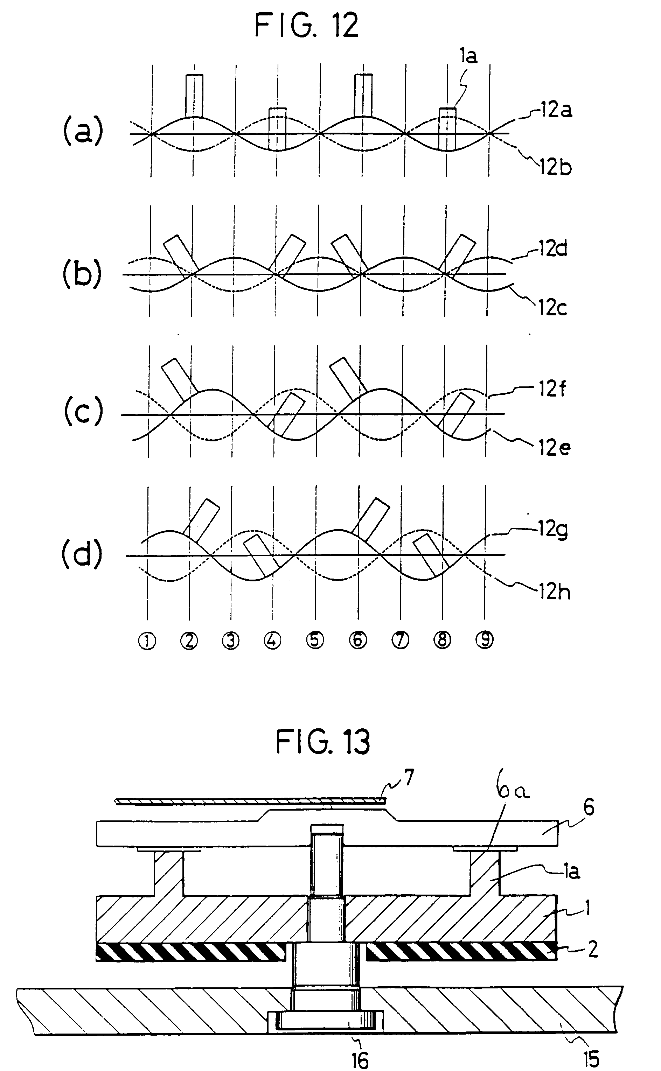

Figure 8 illustrates a vibration member used in a third embodiment of the present invention, wherein (a) is a front plan view and (b) is a sectional view. In this embodiment, a piezo-electric element 21 and a piezo-electric element 22 are each equally divided into six segments neighbouring ones of which are oppositely polarized. The segments of the elements 21, 22 are joined together via the vibration member 1 in such a way that they are respectively half a pitch apart. In this arrangement, the projections 1a are arranged on the central portions of the segments of the piezo-electric element 21 and on the boundaries of the segments of the piezo-electric element 22 in order to obtain the same effects as those of the foregoing embodiment. Details in relation to this will be described in conjunction with Figures 10 and 12.

Figure 9 illustrates a vibration member used in a fourth embodiment of the present invention wherein (a) is a front plan view and (b) is a sectional view like those of Figure 8. In this embodiment, the piezo-electric element 21 and the piezo-electric element 22 are constituted in the same manner as those of Figure 8. However, in contrast to the latter, the piezo-electric element 22 is not provided on the side of projections 1a of the vibration member 1 but is laminated on the piezo-electric element 21. The vibration member 1 works on substantially the same principle as that of the vibration member 1 of the third embodiment. Figures 8 and 9 illustrate the cases where the number of waves excited in the circumferential direction is three.

Figure 10 illustrates a vibration member of a fifth embodiment of the present invention, and Figures 11 and 12 explain the principle of operation of the fifth embodiment. As regards the principle of operation of the fifth embodiment, it should be made clear that this is similar to that of Figures 8 and 9 except with regard to the number of waves excited in the circumferential direction.

In Figure 10, a piezo-electric element 21 and a piezo-electric element 22 in the form of a disc are each divided into four equal segments. The neighbouring segments of each element are oppositely polarized and are joined together via the vibration member 1. The segments of the elements 21, 22 are respectively relatively spaced apart by a half pitch. For ease of explanation, the boundaries of the segments of the piezo-electric element 21 are denoted by ①, ③, ⑤, ⑦ in order, and the boundaries of the segments of the piezo-electric element 22 are denoted by ②, ④ , ⑥, ⑧ in order. In this case, the projections 1a are formed on ②, ④, ⑥, ⑧. In this embodiment, two standing-waves are excited in the circumferential direction of the vibration member 1. The piezo-electric elements 21, 22 in the present embodiment form electrode patterns maintaining a multiple of 4 and a nearly equal distance.

Figure 11 is a diagram showing in cross section the vibration member used in the fifth embodiment of the present invention and the wiring thereof. In the explanation of Figure 11 given below, reference will also be made to the cross-sectional view of Figure 10(b). The separate electrode segments a1, a2, a3 and a4 of the piezo-electric element 21 joined to the lower surface of the vibration member 1 in this condition are coupled together by a lead wire 3a, and the separate electrode segments b1, b2, b3 and b4 of the piezo-electric element 22 joined to the upper surface of the vibration member 1 are coupled together by a lead wire 3b. The cyclic voltage from the cyclic voltage generating unit (not shown) is applied through switching means (not shown) to the lead wire 3b in phase or in opposite phase relative to the lead wire 3a. Therefore, the standing waves excited in the vibration member 1 have phases that differ by 90 degrees relative to each other, making it possible to switch the driving direction of the moving member (not shown).

Figure 12 is a diagram illustrating the principle of deformation of the vibration member of the fifth embodiment of the present invention, wherein (a) illustrates the case where a cyclic voltage is applied to the lead wire 3a of Figure 11 to excite the piezo-electric elements a1, a2, a3 and a4. A projection 1a is shown as developing a displacement in the vertical direction. The diagram (b) illustrates the case where the cyclic voltage is applied to the lead wire 3b of Figure 11 to excite the piezo-electric elements b1, b2, b3 and b4. The projection 1a is shown as developing a displacement in the lateral direction. The diagram (c) illustrates the case where the cyclic voltage applied to the lead wire 3a is in phase with the cyclic voltage applied to the lead wire 3b, and the diagram (d) illustrates the case where these voltages have opposite phases relative to each other. The diagram (c) and (d) are ones in which the diagrams (a) and (b) are synthesized while maintaining a phase difference, the projections 1a being arranged at every other intermediate position between the loops and the nodes of the excited standing-waves. Therefore, a standing-wave type ultrasonic motor is produced based upon substantially the same principle as that of Figure 6. In the diagram (c), the moving member is driven toward the left and in the diagram (d), the moving member is driven toward the right.

Figure 13 is a sectional view of a standing-wave type ultrasonic motor according to the present invention incorporating one of the above-mentioned vibration members. A centre shaft 16 is screwed or is drive-fitted into a support plate 15, and a vibration member 1 having the shape of a disc is fixed at its central portion to the centre shaft 16 as a unitary structure. The vibration member 1 is made of a resilient material such as aluminium alloy, stainless steel or brass and is supported substantially at its central portion by the centre shaft 16. The centre shaft 16 need not necessarily be of a unitary structure but may be of a two-body structure provided that this is possible having regard to the need to adhere the piezo-electric element 2 to the vibration member 1. If the centre shaft 16 is made of an electrically conductive material, furthermore, the potential can be substantially equalized to that of the surface of adhesion, so enabling the wiring to be easily accomplished. The piezo-electric element 2 is the one used for the vibration member of the first to fifth embodiments of the present invention, and is joined to at least one of the surfaces of the vibration member 1.

A movable member 6 is mounted for rotation about the centre shaft 16 and is so arranged as to be pressed into contact with the projections 1a formed on the vibration member 1 owing to a pressure spring 7. In this case, the projections 1a should be formed together with the vibration member 1 as a unitary structure from the standpoint of transmitting vibration but may be separately formed using a different material. Further, the movable member 6 may have a unitary structure. Generally, however, a frictional slide portion 6a which engages the projections 1a serves as an important element from the standpoint of motor characteristics and should, therefore, be composed of a special material that exhibits a high coefficient of friction, that wears little and that has rigidity to absorb vibration.

In the case of a standing-wave type ultrasonic motor of this construction, the vibrationmode in the radial direction may be a primary, secondary or tertiary one. When the vibration mode is of secondary or higher order, vibration nodes develop concentrically even in the radial direction and the nodes may be supported at positions in addition to the centre shaft portion. If the size and diameter of the motor is decreased, however, the resonance frequency increases with the increase in the number of the said order. When the motor has an outer diameter smaller than 10 mm, in particular, the primary mode is a practical one for taking the power source efficiency into consideration. In general, the primary mode tends to have a lower coefficient of electromechanical coupling than the secondary mode. In the case of a standing-wave type ultrasonic motor of this construction, however, favourable motor characteristics are exhibited particularly for light-load applications even when the size and diameter are decreased.

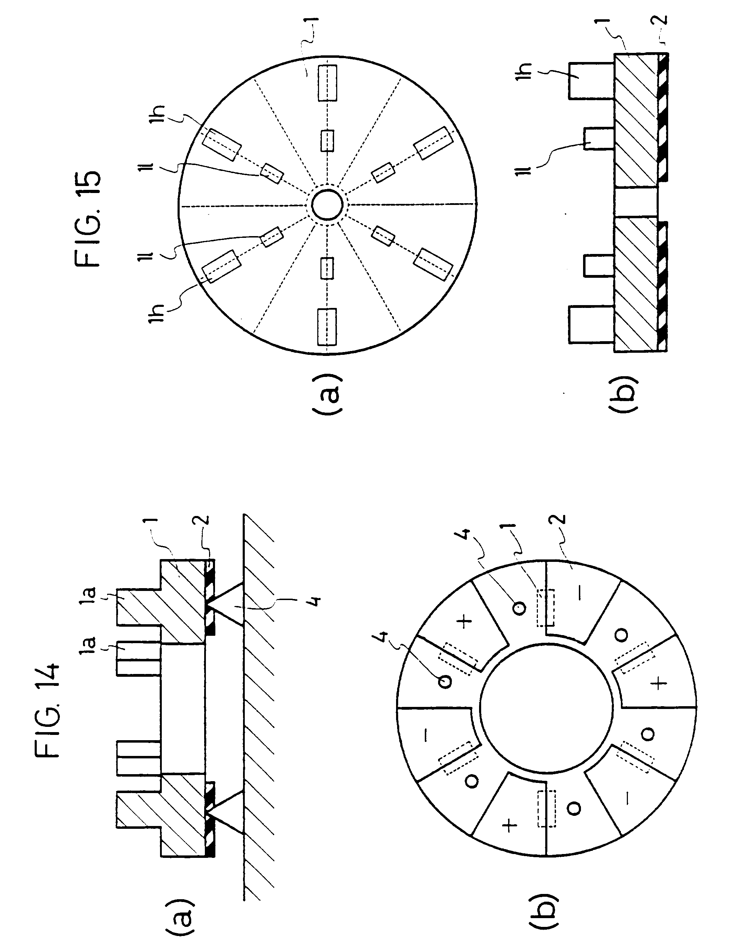

Figure 14 illustrates a vibration member of a sixth embodiment of the present invention, wherein (a) is a section view and (b) is a back plan view. The positional relationship of the piezo-electric element 2 and the projections la for the vibration member 1 and the construction are quite similar to those of the first embodiment of the present invention shown in Figure 1. The embodiment in this case, however, is one in which the vibration member 1 is of the ring type instead of the disc type. When the vibration member 1 is of the ring type, difficulty is involved with respect to supporting the vibration member since it does not have the node at the central portion that is possessed by the disc-type member. In the case of the present invention based on the standing waves, however, the portions marked with a circle become nodal portions when the movable member is rotated in one direction only. These portions can be fixedly supported by a support means 4 so that the present invention can be employed even for the case of a ring-type vibration member.

Figure 15 illustrates a vibration member of a seventh embodiment of the present invention, wherein (a) is a front plan view and (b) is a sectional view. According to this embodiment, the positional relationship of the piezo-electric element 2 and projections 1h, 1*l* of the vibration member 1 and the construction are similar to those of the foregoing embodiment. In this case, however, the provision of high projections lh and low projections 1*l* in the radial direction of the vibration member 1 makes a feature of this embodiment. This makes it possible to simultaneously drive two movable members (not shown) by one vibration member 1 via two kinds of projections 1h and 1*l*. Here, the projections 1h, 1*l* may have the same height or may be provided in two or more kinds. In that case, many movable members can be driven by one vibration member 1. By changing the position and height of the projections, furthermore, various numbers of revolutions can be obtained for the various movable members.

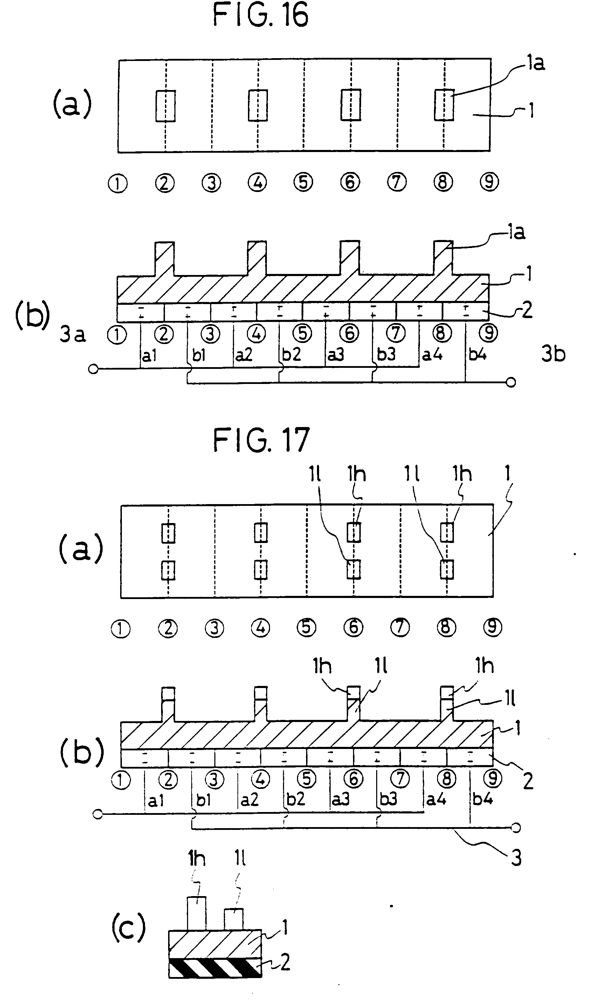

Figure 15 illustrates the wiring of a vibration member of a linear-type ultrasonic motor according to an eighth embodiment of the present invention, wherein (a) is a front plan view and (b) is a sectional view. This embodiment illustrates the case where the disc-type vibration member of the second embodiment shown in Figure 4 is adapted to a linear-type one. Therefore, the principle of operation is similar to that of the disc-type one, and the description of Figures 5 to 6 can be directly applied. In Figure 16, a piezo-electric element 2 is used having the shape of a flat plate that is joined to the vibration member 1 and is equally divided into eight segments which are denoted by a1, b1, a2, b2,- - -, b4 in order and are polarized as shown. For ease of explanation, furthermore, the boundaries of the segments are denoted by ①, ②, ---, ⑨ and projections la are provided at ②, ④, ⑥, ⑧. The thus separated piezo-electric elements a1, a2, a3 and a4 are connected together by a lead wire 3a and the piezo-electric elements bl, b2, b3 and b4 are connected together by a lead wire 3b. A cyclic voltage from a cyclic voltage generating unit is applied to the lead wire 3a or to the lead wire 3b through switching means (not shown) so that standing-waves having phases differing by 90 degrees are excited in the vibration member 1. Therefore, a standing-wave type ultrasonic motor is provided which enables the direction of movement of the movable member to be switched to the right or to the left. Although reference has been made to an embodiment of the linear type, it should be noted that the invention can also be easily adapted to even a zig-zag type motor in addition to the linear one.

Figure 17 illustrates a vibration member of a ninth embodiment of the present invention and the wiring thereof, wherein (a) is a front plan view, (b) is a sectional view, and (c) is a left side view. This embodiment relates to the case where a plurality of different kinds of projections 1h, 1*l* are provided for the vibration member 1 of the linear-type ultrasonic motor that is shown in Figure 16. Even in the case of the linear-type vibration member like the one mentioned in conjunction with Figure 15, it is possible to drive a plurality of movable members using one single vibration member. In this case, when high projections 1h and low projections 1*l* are provided, the movable members can be driven in the same direction but at different speeds. Moreover, when two kinds of projections are provided at different portions,e.g., when the projections 1h are provided on ②, ④, ⑥, ⑧and the projections 1*l* are provided on ①, ③, ⑤, ⑦, the movable members can be driven in opposite directions relative to each other.

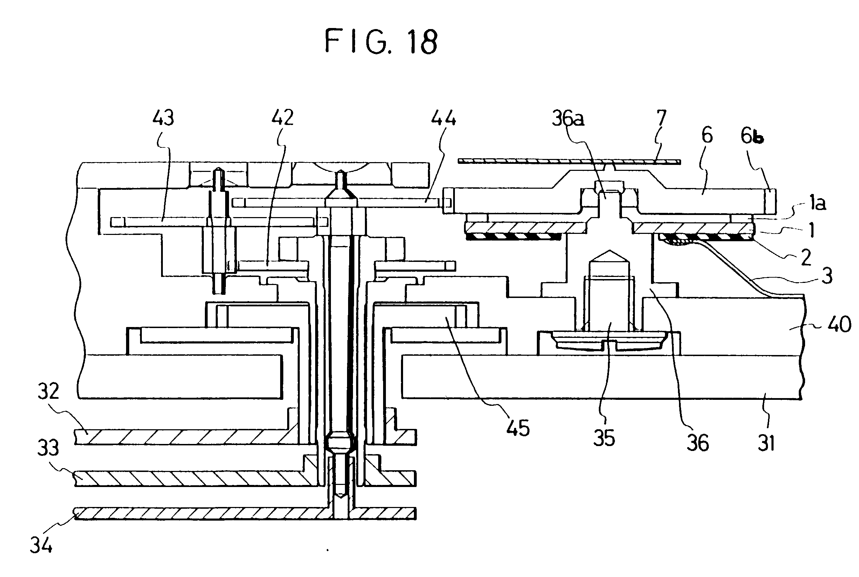

Figure 18 is a vertical section view of an analog electronic timepiece using a standing-wave type ultrasonic motor according to the present invention.

A vibration member 1 having a piezo-electric element 2 adhered to the back surface thereof is fastened to a guide pin 36 which is fastened by a stop screw 35 to a main plate 40.

A plurality of projections la are provided on the upper surface of the vibration member 1, and a movable member 6 which is guided by the tip 36a of the guide pin 36 is rotatably mounted on the projections 1a and is pressed against them by the force of a pressure spring 7.

A predetermined cyclic voltage is applied to the piezo-electric element 2 from a drive control circuit (not shown) via a lead wire 3 connected to the piezo-electric element 2. As a result, the vibration member 1 undergoes deformation and the movable member 6 is rotated at a predetermined speed due to the deformation of the projections 1a.

A movable member gear 6b formed along the periphery of the movable member 6 rotates a fourth wheel 44 and further rotates a third wheel 43, a minute wheel 42, another minute wheel that is not shown, and an hour wheel 45 at predetermined speeds.

If the period of the cyclic voltage applied to the piezo-electric element 2 and the numbers of teeth of the gears are suitably selected, the hours are indicated by an hour hand 32 that is attached to the hour wheel 45, the minutes are indicated by a minute hand 33 that is attached to the minute wheel 42, and the seconds are indicated by a seconds hand 34 attached to the fourth wheel 44.

In addition to being indicated by the train of wheels and the hands described above, the time data can also be indicated by attaching hands or pointers directly on the movable member 6. Namely, the time can be seen from the side of the dial 31 in Figure 18 as well as from the side of the pressure spring 7.

By adjusting the frequency of the cyclic voltage applied to the piezo-electric element 2, furthermore, the seconds hand 34 can be moved stepwise for every second or can be continuously moved.

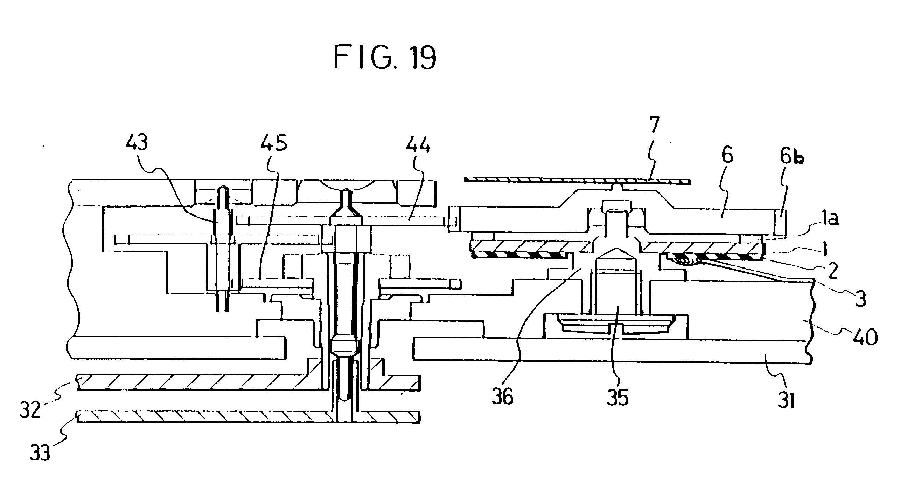

Figure 19 is a vertical section view of a two-hand analog electronic timepiece using a standing-wave type ultrasonic motor according to the present invention. The rotation of the movable member gear 6b is transmitted to the fourth wheel 44, to the third wheel 43 and to the second wheel 45, and the minutes are indicated by a minute hand 33 attached to the fourth wheel 44 and the hours are indicated by an hour hand 32 attached to the second wheel 45. The two-hand timepiece can be easily obtained by simply exchanging some of the parts of the three-hand timepiece of Figure 18 and in a reduced thickness.

In the embodiments of the present invention described above, projections are provided at nearly every other intermediate position of the loops and the nodes of standing-waves that are generated in the vibration member by the piezo-electric effect or the electrostrictive effect of the piezo-electric element or the electrostrictive element, and the movable member is simply brought into pressure contact with the projections so as to be frictionally driven, in order to obtain effects as described below.
(1) The motor can be driven forward and reverse.
(2) Owing to the nature of the piezo-electric element or the electrostrictive element, there is no need to use a plurality of piezo-electric elements or electrostrictive elements. By simply switching the piezo-electric element or the electrostrictive element to which a high frequency signal is to be applied, the motor can be driven forward or in reverse. Therefore, only one booster circuit and drive circuit need be used, and the motor as a whole can be constructed in a small size even including the control circuit.
(3) The movable member is frictionally driven by the projections provided substantially midway between the loops and the nodes of the standing waves. Therefore, stable motor performance is obtained even for a change in the pressure force compared with the case of the progressive-wave type motor in which the movable member is in contact with the loops at all times.
(4) Two projections come in contact with the movable member for a wave length of the standing wave. Therefore, the motion of the projections is efficiently converted as a drive force without working as a brake even in the case of a coarse or undulating contact surface of the movable member, enabling one to obtain stable motor performance and to maintain high efficiency.
(5) Since the construction is very simple, the motor can be of a reduced overall size and of a reduced diameter.

Furthermore, an analog electronic timepiece using the standing-wave type ultrasonic motor of the present invention does not need a coil block, stator, rotor, fifth wheel and the like that were previously used. Therefore, an analog timepiece which is small in size and thin can be provided. By changing some parts, there can be obtained either a three-hand timepiece or a two-hand timepiece, and the hands can be moved continuously or stepwise.

## Claims

1. A standing wave type ultrasonic motor comprising:
a vibration member (1) having projections (1a) in drive-transmitting contact with a movable member (6);
support means (16) for supporting the vibration member;
a piezo-electric or electrostrictive element (2) having a plurality of electrode patterns (2a) arranged to generate a flexible standing wave in the vibration member; and
connecting means for the electrical connection of alternate electrode patterns to form two electrode pattern groups;
the electrode patterns (2a) being arranged in multiples of 4, being substantially equally spaced apart, and being polarised such that the direction of polarisation is alternately reversed for each pair of two neighbouring electrode patterns; and characterized in that
the projections (1a) are arranged at every other boundary of the electrode patterns and such that they appear at every other one of the intermediate positions between the loops and nodes of the flexible standing wave.

2. A motor as claimed in claim 1, wherein the piezo-electric or electrostrictive element (2) is adhered to the vibration member (1).

3. A motor as claimed in claim 1 or 2, wherein the support means (16) supports a nodal portion or portions of the vibration member (1).

4. A motor as claimed in claim 1 or 2, wherein the vibration member (1) is shaped as a ring.

5. A motor as claimed in claim 1 or 2, wherein the vibration member (1) is shaped as a disc.

6. A motor as claimed in any preceding claim wherein the support means (16) is made of an electrically conductive material.

7. A motor as claimed in any preceding claim, wherein the vibration member (1) has a plurality of projections (1a) in the radial direction.

8. A motor as claimed in any preceding claim, wherein the projections (1a) are of different heights.

9. A motor as claimed in any preceding claim,further comprising switching means for selectively applying a cyclic voltage to each of said two electrode pattern groups.

10. A motor as claimed in any preceding claim, wherein there are two piezo-electric elements or electrostrictive element (21, 22), each of which is provided with one of the electrode pattern groups, the piezoelectric or electrostrictive element arranged such that the boundary of each position of one piezo-electric element or electrostrictive element is positioned near the centre of that of the other one; and said projections are arranged on the boundaries of the portions of either one of the said piezo-electric elements or electrostrictive elements.

11. An analog-type electric timepiece comprising a motor as claimed in any preceding claim.

## Patentansprüche

1. Ultraschallmotor des Typs mit stehender Welle, umfassend:
ein Schwingungselement (1) mit Vorsprüngen (1a),
welche mit einem bewegbaren Element (6) in Antriebsübertragungskontakt stehen,
ein Tragemittel (16) zum Tragen des Schwingungselements,
ein piezoelektrisches oder elektrostriktives Element (2) mit einer Mehrzahl von Elektrodenmustern (2a),
welche zum Erzeugen einer flexiblen stehenden Welle in dem Schwingungselement eingerichtet sind, und
Verbindungsmittel zum elektrischen Verbinden von alternierenden Elektrodenmustern zum Bilden zweier Elektrodenmustergruppen,
wobei die Elektrodenmuster (2a) in Vielfachen von 4 angeordnet sind, im wesentlichen im gleichen Abstand zueinander angeordnet sind und polarisiert sind,
derart, daß die Polarisationsrichtung für jedes Paar zweier benachbarter Elektrodenmuster alternierend umgekehrt ist, und dadurch gekennzeichnet, daß die Vorsprünge (1a) an jeder zweiten Grenze der Elektrodenmuster und derart angeordnet sind, daß sie an jeder zweiten der Zwischenpositionen zwischen den Schleifen und Knoten der flexiblen stehenden Welle sind.

2. Motor nach Anspruch 1, worin das piezoelektrische oder elektrostriktive Element (2) an dem Schwingungselement (1) anhaftend angebracht ist.

3. Motor nach Anspruch 1 oder 2, worin das Tragemittel (16) einen Knotenabschnitt oder Abschnitte des Schwingungselements (1) trägt.

4. Motor nach Anspruch 1 oder 2, worin das Schwingungselement (1) als ein Ring geformt ist.

5. Motor nach Anspruch 1 oder 2, worin das Schwingungselement (1) als eine Scheibe geformt ist.

6. Motor nach einem der vorhergehenden Ansprüche, worin das Tragemittel (16) aus elektrisch leitfähigem Material hergestellt ist.

7. Motor nach einem der vorhergehenden Ansprüche, worin das Schwingungselement (1) eine Mehrzahl von Vorsprüngen (1a) in der radialen Richtung aufweist.

8. Motor nach einem der vorhergehenden Ansprüche, worin die Vorsprünge (1a) verschiedene Höhen aufweisen.

9. Motor nach einem der vorhergehenden Ansprüche, ferner umfassend Schaltmittel zum wahlweisen Anlegen einer zyklischen Spannung an jede der beiden Elektrodenmustergruppen.

10. Motor nach einem der vorhergehenden Ansprüche, worin zwei piezoelektrische Elemente oder elektrostriktive Elemente (21, 22) vorgesehen sind, von welchen jedes mit einer Elektrodenmustergruppe versehen ist, wobei das piezoelektrische oder elektrostriktive Element derart eingerichtet ist, daß die Grenze von jeder Position eines piezoelektrischen Elements oder elektrostriktiven Elements nahe dem Zentrum desjenigen der anderen angeordnet ist, und worin die Vorsprünge an den Grenzen der Abschnitte von einem der piezoelektrischen Elemente oder elektrostriktiven Elemente angeordnet ist.

11. Elektrischer Zeitmesser des Analogtyps, umfassend einen Motor nach einem der vorangehenden Ansprüche.

## Revendications

1. Moteur de type à ultrason à ondes stationnaires comprenant :
un élément (1) de vibration comportant des protubérances (1a) qui coopèrent avec un élément (6) amovible suivant un contact de transmission d'entraînement ;
des moyens (16) de support pour supporter l'élément de vibration;
un élément (2) piézo-électrique ou à électrostriction ayant une pluralité de configurations (2a) d'électrodes disposées de manière à produire une onde stationnaire souple dans l'élément de vibration, et
des moyens de connection pour la connexion électrique de configurations d'électrodes alternées pour former deux groupes de configurations d'électrodes ;
les configurations (2a) d'électrodes étant agencées en multiples de 4, sensiblement à distance égales les unes des autres, et polarisées de manière que la direction de polarisation soit alternativement inversée pour chaque paire de deux configurations d'électrodes voisines ; et caractérisé en ce que
les protubérances (1a) sont agencées à l'une sur deux en alternance des bornes des configurations d'électrodes et de manière à ce qu'elles apparaissent à l'une sur deux en alternance des positions intermédiaires entre les ventres et les noeuds de l'onde stationnaire souple.

2. Moteur suivant la revendication 1, dans lequel l'élément piézo-électrique où à électrostriction est fixé à l'élément (1) de vibration.

3. Moteur suivant la revendication 1 ou 2, dans lequel les moyens (16) de support supportent une ou des partie(s) nodale(s) de l'élément (1) de vibration.

4. Moteur suivant la revendication 1 ou 2, dans lequel l'élément (1) de vibration a la forme d'une bague.

5. Moteur suivant la revendication 1 ou 2 , dans lequel l'élément (1) de vibration a la forme d'un disque.

6. Moteur suivant l'une quelconque des revendications précédentes, dans lequel les moyens (16) de support sont en un matériau conducteur de l'électricité.

7. Moteur suivant l'une quelconque des revendications précédentes, dans lequel l'élément (1) de vibration comporte une pluralité de protubérances (1a) suivant la direction radiale.

8. Moteur suivant l'une quelconque des revendications précédentes, dans lequel les protubérances (1a) ont des hauteurs différentes.

9. Moteur suivant l'une quelconque des revendications précédentes, comprenant en outre des moyens de commutation pour appliquer sélectivement une tension cyclique à chacun des deux groupes de configurations d'électrodes.

10. Moteur suivant l'une quelconque des revendications précédentes, dans lequel il y a deux éléments (21,22) piézo-électriques ou à électrostriction, chacun d'eux étant munis d'un des groupes de configurations d'électrodes, les éléments piézo-électrique ou à électrostriction étant disposés de sorte que la borne de chaque position d'un élément piézo-électrique ou à électrostriction soit positionnée à proximité du centre de l'autre; et les protubérances sont disposées sur les bornes des parties de l'un ou l'autre des éléments piézo-électriques ou à électrostriction.

11. Appareil électrique de type analogique indiquant l'heure comprenant un moteur tel que revendiqué à l'une quelconque des revendications précédentes.
